# DEMANDE DE BREVET EUROPEEN

(11) **EP 1 065 129 A1**
(43) Date de publication de la demande: **03.01.2001**
(21) Numéro de dépôt: 00401818.0
(22) Date de dépôt: 26.06.2000
(51) Int. Cl.: B62B 3/18

(54) **Porte-gobelets en fils pour chariot notamment emboîtable et chariot équipé d'un tel porte-gobelets**

(30) Priorité: 30.06.1999 FR 9908387
(71) Demandeur: ATELIERS REUNIS CADDIE, 67301 Schiltigheim Cedex (FR)
(72) Inventeur: Joseph, Alice, 67301 Schiltigheim Cedex (FR); Le Marchand, Alain, 67116 Reichstett (FR)
(74) Mandataire: CABINET BONNET-THIRION

(57) **Abrégé**

Porte-gobelets pour chariot constitué, d'une part, d'un étrier (21), dit de maintien, en fil plié globalement en U ayant une âme (22) et deux ailes (23,24) et, d'autre part, d'un anneau (28,128) en fil de forme allongée, globalement rectangulaire, dont les grands côtés (29,30,129,130) sont solidarisés aux ailes (23,24) de l'étrier de maintien (21) en s'étendant parallèlement à l'âme (22) dudit étrier de maintien (21), leur longueur étant supérieure à celle de ladite âme (22) en sorte que sont réalisées, de part et d'autre de l'étrier (21), conjointement par les ailes de l'étrier de maintien (21) et l'anneau (28), deux ouvertures (33,34) adaptées à recevoir chacune un gobelet (G).

Chariot équipé d'un tel porte-gobelets.

## Description

La présente invention concerne un porte-gobelets pour chariot.

Un tel chariot est par exemple du genre de ceux mis à disposition de la clientèle dans les grandes surfaces pour le transport de ses achats ; le plus souvent, les chariots sont emboîtables pour réduire leur encombrement en stockage.

Un tel chariot comporte généralement un châssis constitué de montants latéraux et d'un socle, une poignée de préhension montée à l'extrémité supérieure des montants, et des roues portées par le châssis ; très souvent, il comporte également un siège pour enfant rabattable.

La présente invention a pour but d'équiper un chariot d'un porte-gobelets et pour objet un porte-gobelets de réalisation simple, s'intégrant parfaitement dans la constitution du chariot sans nuire à l'esthétique de celui-ci.

Selon l'invention, un porte-gobelets pour chariot est caractérisé par le fait qu'il est constitué, d'une part, d'un étrier, dit de maintien, en fil plié globalement en U ayant une âme et deux ailes et, d'autre part, d'un anneau en fil de forme allongée, globalement rectangulaire, dont les grands côtés sont solidarisés aux ailes de l'étrier de maintien en s'étendant parallèlement à l'âme dudit étrier de maintien, leur longueur étant supérieure à celle de ladite âme en sorte que sont réalisées, de part et d'autre de l'étrier, conjointement par les ailes de l'étrier de maintien et l'anneau, deux ouvertures adaptées à recevoir chacune un gobelet.

Avantageusement, les ailes de l'étrier de maintien sont constituées chacune de deux portions faisant entre elles un angle obtus.

De préférence, en désignant par seconde portion de chaque aile celle qui relie l'autre portion, dite première portion, à l'âme de l'étrier de maintien, les deux premières portions des deux ailes sont reliées transversalement par une butée en fil s'étendant parallèlement à l'âme de l'étrier de maintien.

Avantageusement, les grands côtés de l'anneau de forme globalement rectangulaire sont reliés à leurs extrémités par des petits côtés en forme d'arceaux.

De préférence, l'anneau est symétrique et disposé symétriquement par rapport à l'étrier de maintien en sorte que les sections des ouvertures sont égales.

En variante, l'anneau symétrique est disposé de manière dissymétrique par rapport à l'étrier de maintien en sorte que les sections des ouvertures sont différentes.

De préférence, l'anneau est dissymétrique et les grands côtés de l'anneau de forme globalement rectangulaire sont disposés symétriquement par rapport à l'étrier de maintien et reliés par des petits côtés en forme d'arceaux de longueurs différentes.

Avantageusement, les arceaux sont semi-circulaires.

De préférence, les arceaux s'étendent sur plus de 180 degrés.

En variante, les arceaux sont de forme polygonale.

Avantageusement, une corbeille est disposée au droit de l'aire commune délimitée conjointement par l'étrier de maintien et l'anneau.

De préférence, la corbeille est constituée de fils longitudinaux en U et de fils transversaux également en U.

La présente invention a également pour objet un chariot équipé d'un tel porte-gobelets.

De préférence, les extrémités des ailes de l'étrier de maintien sont enroulées autour d'une traverse que comporte le châssis du chariot et qui relie transversalement la partie supérieure de montants latéraux qu'il présente.

Avantageusement, le chariot comporte une barre de préhension et les ailes de l'étrier de maintien s'étendent au dessus et au delà de ladite barre de préhension vers l'arrière du chariot.

De préférence, le porte-gobelets est monté à rotation sur la traverse et la butée en fil du porte-gobelets est adaptée à coopérer en butée avec le dessous de la barre de préhension, limitant ainsi la rotation du porte-gobelets autour de la traverse.

Le chariot comporte une grille arrière dite volet simple articulée autour de la traverse.

Le chariot comporte un volet arrière dit volet enfant articulé autour de la traverse et constitué d'une grille et d'un siège enfant rabattable.

Pour mieux faire comprendre l'objet de l'invention, on va en décrire maintenant, à titre d'exemple, purement illustratifs et non limitatifs, des modes de réalisation représentés sur les dessins annexés.

Sur ces dessins :
- la figure 1 est une vue latérale montrant partiellement la silhouette de la partie supérieure arrière d'un chariot équipée d'un porte-gobelets selon l'invention ;
- la figure 2 est une vue de dessus partielle par rapport à la figure 1 ;
- la figure 3 est analogue à la figure 2 et montre une variante ;
- la figure 4 montre trois chariots emboîtés équipés chacun d'un porte-gobelets selon l'invention ;
- la figure 5 est une vue partielle de la figure 4, à plus grande échelle.

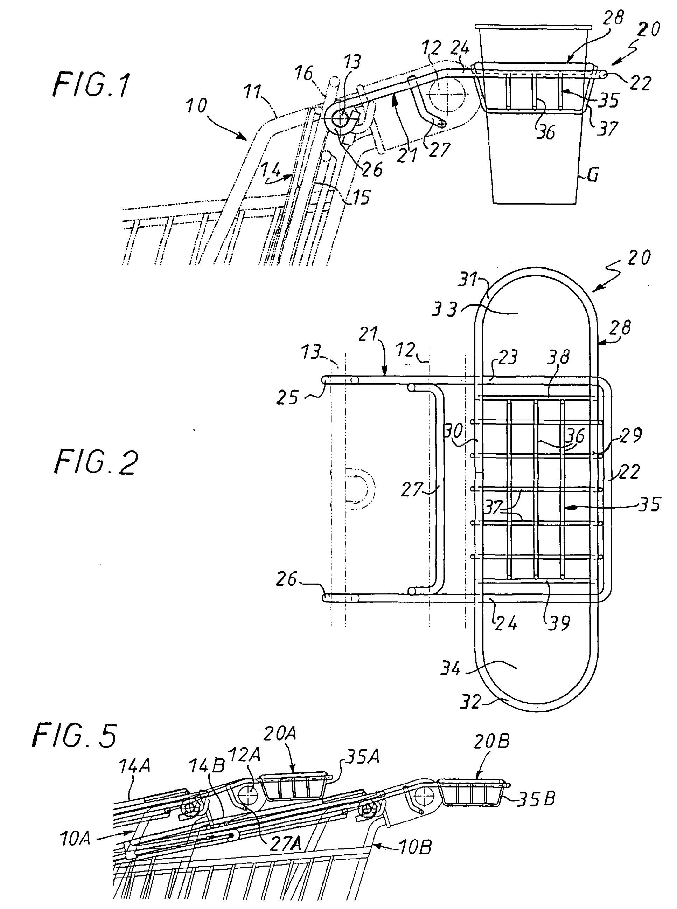

Sur les figures 1 et 2, a été représentée en traits mixtes partiellement la silhouette de la partie supérieure avant d'un chariot 10 dont les montants latéraux 11 en U du châssis portent transversalement une barre de préhension 12.

Les montants latéraux 11 portent également vers l'arrière une traverse 13 autour de laquelle est montée articulée, par sa partie supérieure, un volet arrière 14 qui, comme on le sait, est soulevé par le chariot qui suit lors de l'emboîtage de deux tels chariots.

Le volet 14 comprend une grille 15 et un siège pour enfant dont le dosseret porte la référence 16.

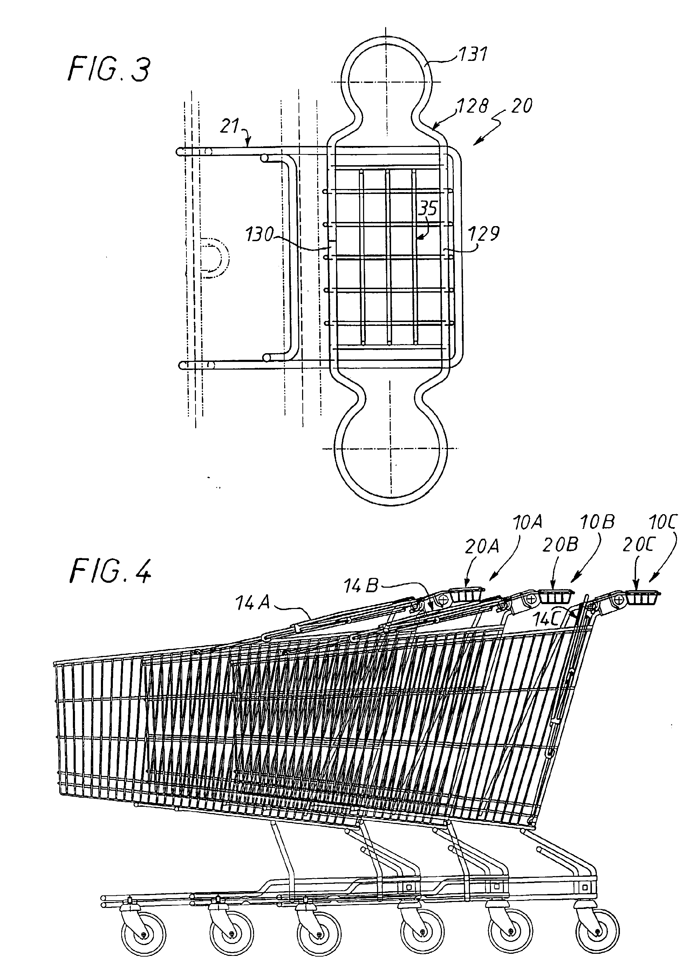

Un tel chariot 10 est connu en soi et ne sera donc pas décrit plus en détails ; il est visible entièrement sur la figure 4.

Le porte-gobelets 20 selon l'invention est constitué d'un étrier de maintien 21 en fil plié globalement en U ayant une âme 22 et deux ailes 23, 24 dont les extrémités respectives 25, 26 sont enroulées, sur plus de 180 degrés, autour de la traverse 13 du châssis du chariot 10, assurant ainsi une fixation à articulation de l'étrier de maintien 21 sur le chariot 10.

Les ailes 23, 24 de l'étrier de maintien 21 s'étendent au dessus et au delà de la barre de préhension 12, par rapport à la traverse 13, c'est-à-dire vers l'arrière du chariot, et sont adaptées à être en appui sur ladite barre de préhension 12.

Avantageusement, les ailes 23 et 24 de l'étrier de maintien 21 ne sont pas rectilignes mais ici sont constituées chacune de deux portions faisant entre elles un angle obtus dont le sommet, de forme arrondie, est au droit de la partie supérieure de la barre de préhension 12 ; la portion, dite première portion, portant l'extrémité 25, 26 des ailes 23, 24 suit globalement l'inclinaison de la partie supérieure des montants 11, tandis que la seconde portion des ailes 23, 24 qui raccorde la première portion à l'âme 22 du U de l'étrier de maintien 21 s'étend horizontalement lorsque celui-ci repose par ses ailes 23, 24 sur la barre de préhension 12.

Les premières portions des ailes 23, 24 de l'étrier de maintien 21 sont reliées transversalement par une butée 27 en fil en U dont l'extrémité des ailes sont liées par soudage auxdites premières portions. L'âme de la butée 27 s'étend parallèlement à l'âme 22 de l'étrier de maintien 28, donc parallèlement à la barre de préhension 12, sous et à distance de celle-ci ; ainsi, l'étrier de maintien 21, qui pourrait tourner autour de la traverse 13, dans le sens inverse de celui des aiguilles d'une montre par rapport à la figure 1 et quitter son appui sur la barre de préhension 12, a une telle course en rotation limitée par la butée 27.

Le porte-gobelets 20 comprend également un anneau en fil 28 de forme allongée, globalement rectangulaire, dont les grands côtés 29, 30 reposent sur les secondes portions des ailes 23, 24 de l'étrier de maintien 21, auxquelles ils sont solidarisés par soudage, en s'étendant parallèlement à l'âme 22 de l'étrier de maintien 21, leur longueur étant supérieure à celle de ladite âme 22.

Les petits côtés 31, 32 de l'anneau 28 de forme globalement rectangulaire, qui relient deux à deux les extrémités des grands côtés 29 et 30, sont ici en forme d'arceaux épousant partiellement la forme d'une section circulaire d'un gobelet.

Ainsi, de part et d'autre de l'étrier 21, l'anneau 28 définit deux ouvertures 33, 34 adaptées à recevoir chacune un gobelet de forme tronconique, tel que le gobelet G montré sur la figure 1.

Ici, l'anneau 28 est symétrique et disposé symétriquement par rapport à l'étrier de maintien 21 en sorte que les ouvertures 33, 34 ont des sections égales, mais, bien entendu, il pourrait ne pas en être ainsi : l'anneau 28, tout en étant symétrique, peut être décalé, de manière dissymétrique, par rapport à l'étrier 21, et les ouvertures 33, 34 ont alors des sections différentes.

Selon la variante de la figure 3, l'anneau 128 est dissymétrique, ses extrémités longitudinales constituées par ses petits côtés étant différentes ; ici, ses grands côtés 129, 130 sont disposés symétriquement et ses petits côtés 131, 132 sont des arceaux circulaires s'étendant sur plus de 180 degrés selon des diamètres différents.

Dans un cas comme dans l'autre, les ouvertures différentes permettent d'accueillir des gobelets de tailles différentes, notamment de diamètres différents.

Ici, les arceaux 31,32,131,132 sont de forme circulaire ; selon une variante non représentée, leur forme est polygonale, par exemple octogonale.

L'aire commune délimitée conjointement par l'étrier de maintien 21 et l'anneau 28 est mise à profit pour y disposer une corbeille 35 peu profonde pouvant accueillir divers petits objets tels que calculatrice, liste de courses, petit carnet ou autres.

La corbeille 35 est constituée de fils longitudinaux 36 en U et de fils transversaux 37 également en U soudés entre eux dans leur zone de contact ; les ailes des fils transversaux 37 sont soudées par leur extrémité aux grands côtés 29, 30 de l'anneau 28, tandis que les extrémités de celles des fils longitudinaux 36 sont soudées à des entretoises 38, 39 en fil elles-mêmes soudées par leurs extrémités aux grands côtés 29, 30 de l'anneau 28.

La corbeille 35 est peu profonde, les âmes des fils en U longitudinaux 36 et transversaux 37 étant à un niveau légèrement supérieur à celui où s'étend la butée 27.

Comme on le voit, le porte-gobelets 20 est de constitution simple, réalisé par l'assemblage de fils pliés et soudés, globalement à la manière du chariot 10 qu'il équipe ; il peut être traité, revêtement ou couleur, de la même façon que les pièces constitutives du chariot 10 ; il ne présente pas de parties saillantes ou agressives et est utilisé en toute sécurité ; son montage à articulation sur la traverse 13 du chariot 10 permet de le déplacer transversalement le long de la barre de préhension 12, ce qui peut être utile notamment lorsque celle-ci porte un consigneur.

Grâce également au montage à articulation, sur la traverse 13, du porte-gobelets 20, avec possibilité de rotation dans la limite du jeu défini par la butée 27, les chariots 10 peuvent être emboîtés, le porte-gobelets 20 ne perturbant pas, grâce audit jeu, le soulèvement du volet 14 qui a lieu lors de cette opération, même lorsque celui-ci comporte un siège pour enfant, configuration pour laquelle le volet 14 a la plus grande épaisseur. Sur la figure 4, sont représentés trois chariots 10A, 10B, 10C emboîtés ; le volet 14C du chariot 10C, dernier de la file, ferme l'arrière de ce chariot et son porte-gobelets 20C repose sur sa barre de préhension ; le chariot 10C emboîté dans le chariot 10B a soulevé le volet 14B de ce chariot, lequel volet 14B a légèrement, par contact, soulevé le porte-gobelets 20A du chariot 14A dans lequel est emboîté le chariot 10B. Comme cela est mieux visible sur la figure 5 où seuls sont représentés les chariots 10A et 10B, le volet 14B a soulevé la corbeille 35A du porte-gobelets 20A, lequel a quitté son appui sur la barre de préhension 12A, la butée 27A s'étant rapprochée de celle-ci.

Grâce à cette disposition, l'emboîtement des chariots 10 se fait sans coincement.

Selon une variante non représentée, le jeu entre la butée 27 et la barre de préhension 12 est nul, le porte-gobelets 20 étant ainsi empêché de tourner autour de la traverse 13 ; dans ce cas, la hauteur de la corbeille 35 du porte gobelets 20 est choisie en sorte que, lors de l'emboîtement de chariots, le volet du chariot suivant n'entre pas en contact avec la corbeille 35 du chariot précédent.

## Revendications

1. Porte-gobelets pour chariot, caractérisé par le fait qu'il est constitué, d'une part, d'un étrier (21), dit de maintien, en fil plié globalement en U ayant une âme (22) et deux ailes (23,24) et, d'autre part, d'un anneau (28,128) en fil de forme allongée, globalement rectangulaire, dont les grands côtés (29,30,129,130) sont solidarisés aux ailes (23,24) de l'étrier de maintien (21) en s'étendant parallèlement à l'âme (22) dudit étrier de maintien (21), leur longueur étant supérieure à celle de ladite âme (22) en sorte que sont réalisées, de part et d'autre de l'étrier (21), conjointement par les ailes de l'étrier de maintien (21) et l'anneau (28), deux ouvertures (33,34) adaptées à recevoir chacune un gobelet (G).

2. Porte-gobelets selon la revendication 1, caractérisé par le fait que les ailes (23,24) de l'étrier de maintien (21) sont constituées chacune de deux portions faisant entre elles un angle obtus.

3. Porte-gobelets selon la revendication 2, caractérisé par le fait que, en désignant par seconde portion de chaque aile (23,24) celle qui relie l'autre portion, dite première portion, à l'âme (22) de l'étrier de maintien (21), les deux premières portions des deux ailes (23,24) sont reliées transversalement par une butée (27) en fil s'étendant parallèlement à l'âme (22) de l'étrier de maintien (21).

4. Porte-gobelets selon l'une des revendications 1 à 3, caractérisé par le fait que les grands côtés (29,30,129,130) de l'anneau (28,128) de forme globalement rectangulaire sont reliés à leurs extrémités par des petits côtés (31,32,131,132) en forme d'arceaux.

5. Porte-gobelets selon l'une des revendications 1 à 4, caractérisé par le fait que l'anneau (28) est symétrique et disposé symétriquement par rapport à l'étrier de maintien (21) en sorte que les sections des ouvertures (33, 34) sont égales.

6. Porte-gobelets selon l'une des revendications 1 à 4, caractérisé par le fait que l'anneau (28) est symétrique et disposé de manière dissymétrique par rapport à l'étrier de maintien (21) en sorte que les sections des ouvertures (33, 34) sont différentes.

7. Porte-gobelets selon l'une des revendications 1 à 4, caractérisé par le fait que l'anneau (128) est dissymétrique et les grands côtés (129,130) de l'anneau (128) de forme globalement rectangulaire sont disposés symétriquement par rapport à l'étrier de maintien (21) et reliés par des petits côtés (131,132) en forme d'arceaux de longueurs différentes.

8. Porte-gobelets selon l'une des revendications 4 ou 7, caractérisé par le fait que les arceaux (31,32,131,132) sont semi-circulaires.

9. Porte-gobelets selon la revendication 8, caractérisé par le fait que les arceaux (131,132) s'étendent sur plus de 180 degrés.

10. Porte-gobelets selon l'une des revendications 4 ou 7, caractérisé par le fait que les arceaux sont de forme polygonale.

11. Porte-gobelets selon l'une des revendications 1 à 10, caractérisé par le fait qu'une corbeille (35) est disposée au droit de l'aire commune délimitée conjointement par l'étrier de maintien (21) et l'anneau (28,128).

12. Porte-gobelets selon la revendication 11, caractérisé par le fait que la corbeille (35) est constituée de fils longitudinaux (36) en U et de fils transversaux (37) également en U.

13. Chariot équipé d'un porte-gobelets selon l'une au moins des revendications 1 à 12.

14. Chariot selon la revendication 13, caractérisé par le fait que les extrémités (25,26) des ailes (23,24) de l'étrier de maintien (21) sont enroulées autour d'une traverse (13) que comporte le châssis du chariot et qui relie transversalement la partie supérieure de montants latéraux (11) qu'il présente.

15. Chariot selon l'une des revendications 13 ou 14, caractérisé par le fait que le chariot comporte une barre de préhension (12) et les ailes (23,24) de l'étrier de maintien (21) s'étendent au dessus et au delà de ladite barre de préhension vers l'arrière du chariot.

16. Chariot selon les revendications 14 et 15 prises conjointement, le porte-gobelets étant selon l'une des revendications 3 à 12, caractérisé par le fait que le porte-gobelets (20) est monté à rotation sur la traverse (13) et la butée (27) en fil est adaptée à coopérer en butée avec le dessous de la barre de préhension (12), limitant ainsi la rotation du porte-gobelets (20) autour de la traverse (13).

17. Chariot selon l'une des revendications 14 à 16, caractérisé par le fait qu'il comporte une grille arrière articulée autour de la traverse (13).

18. Chariot selon l'une des revendications 14 à 16, caractérisé par le fait qu'il comporte un volet (14) arrière articulé autour de la traverse (13) et constitué d'une grille (15) et d'un siège enfant (16) rabattable.
